# EUROPÄISCHE PATENTSCHRIFT

(11) **EP 0 411 531 B1**
(45) Veröffentlichungstag und Bekanntmachung des Hinweises auf die Patenterteilung: **02.03.1994**
(21) Anmeldenummer: 90114582.1
(22) Anmeldetag: 30.07.1990
(51) Int. Cl.: A61C 13/265

(54) **Anker zum Befestigen einer abnehmbaren Zahnprothese an einem festsitzenden Prothesenteil**
Anchor for attaching a removable dental prosthesis to a fixed prosthesis portion
Attache pour fixer une prothèse dentaire amovible à une partie de prothèse fixe

(30) Priorität: 01.08.1989 DE 8909278 U; 31.10.1989 DE 8912852 U
(43) Veröffentlichungstag der Anmeldung: 06.02.1991
(73) Patentinhaber: Obersat, Adam, 67618 Kaiserslautern (DE)
(72) Erfinder: Obersat, Adam, 67618 Kaiserslautern (DE)
(74) Vertreter: Bernhardt, Winfrid, Dr.-Ing.

(56) Entgegenhaltungen:
- DE-A- 3 107 690
- US-A- 1 688 145

## Beschreibung

Die Erfindung betrifft einen Anker zum Befestigen einer abnehmbaren Zahnprothese an einem festsitzenden Prothesenteil, der aus einer eine Hinterschneidung aufweisenden Patrize und einer die Patrize ringförmig umfassenden, mit mindestens einem federnden Rastelement in die Hinterschneidung greifenden Matrize besteht, wobei das Rastelement sich mit tangentialer Komponente zu der Patrize erstreckt.

Ein solcher Anker ist aus der DE-A-31 07 690 bekannt. Die Patrize ist dort ein Konus, die Matrize ein längsgeschlitzter Hohlkonus mit einem konsolartigen Ansatz. Der Ansatz weist an seinem Rand eine Rille auf, die eine etwa U-förmige Feder aufnimmt. Diese Feder ragt mit ihren Enden schräg durch Wanddurchbrüche der Matrize hindurch in Ausnehmungen der Patrize. Sie kann, jeweils unter Spreizung, rastend aufgesteckt sowie abgezogen werden.

Ein weiterer Anker der eingangs genannten Art ist durch Gebrauch bekannt. Dessen federndes Rastelement besteht aus einem in einer Ringnut der Matrize angeordneten Federring, der beim Zusammenschieben von Matrize und Patrize aufgeweitet und vollständig in die Ringnut zurückgedrängt wird und nach dem Einrasten teils in der Ringnut und teils in der Hinterschneidung sitzt.

Der Erfindung liegt die Aufgabe zugrunde, einen Anker der eingangs bezeichneten Art mit einem Rastelement zu versehen, das bei genügender Haltekraft eine genauer begrenzte Abzugskraft einzustellen erlaubt.

Gemäß der Erfindung wird dieser Zweck dadurch erfüllt, daß das Rastelement beiderseits der Stelle seines Eingriffs in die Hinterschneidung der Patrize in einer flachen Ausnehmung der Matrize gehalten ist, derart, daß es sich nach tangentialer Durchquerung der Hinterschneidung wieder in die Matrize hinein erstreckt.

Dabei lassen sich auch äußerst geringe Abmessungen, insbesondere in der Höhe des Ankers, sowie eine lange Lebensdauer erreichen.

Nach einer vorteilhaften Ausgestaltung der Erfindung ist das Rastelement bzw. sind die Rastelemente - in der Regel werden zwei Rastelemente einander gegenüber angeordnet sein - an einem U-förmigen Einsatzteil angeordnet, das in eine ihm angepaßte Ausnehmung der Matrize, vorzugsweise einrastend, einschiebbar und herausnehmbar ist, wobei der U-Steg in einem nach dem Umfang der Matrize hin offenen Schlitz Platz erhält.

Damit läßt sich ein abgenutztes Rastelement schnell und einfach auch vom Zahnarzt am Behandlungsstuhl auswechseln; es bleibt am U-Steg faßbar. Das erste Einsetzen ist gleichermaßen einfach.

Der bekannte Federring ist demgegenüber so schwer aus der Ringnut zu entfernen, daß man die Matrize schon in der Ringnut geteilt und zusammengeschraubt hat.

Das Einsatzteil ist in einer bsonders einfachen und zweckmäßigen Variante eine Biegefeder, und das Rastelement ist bzw. die Rastelemente sind durch einen, vorzugsweise mit einer Rolle besetzten, U-Schenkel der Biegefeder gebildet.

In einer anderen Variante ist das Einsatzteil eine federnde Halterung für das Rastelement bzw. für die Rastelemente, das bzw. die aus einer auf einer, federnden oder nicht federnden, Achse gelagerten Rolle besteht bzw. bestehen.

Diese Variante bietet die Möglichkeit, die Federfunktion ganz oder teilweise von der Riegelfunktion der Rastelemente und der Lagerfunktion der Achsen zu trennen und in die Halterung zu verlegen, für die ein elastischeres Material gewählt und/oder die bloß als zusätzliche Feder eine weichere Federung bewirken kann.

Ferner kann das eine Halterung für Achse(n) und Rolle(n) bildende Einsatzteil, etwa mit einem U-förmigen, nach innen offenen Querschnitt, die Ausnehmung in der Matrize schubkastenähnlich verschließen und damit das Eindringen von Speiseresten verhindern.

Besonderer Wert der erfindungsgemäß tangential zu der Patrize sich erstreckenden Rastelemente liegt in der Möglichkeit, diese Rastelemente mit den erwähnten Rollen auszugestalten. Die Rollen verringern entscheidend die Reibung und erlauben es damit, die Abzugskraft, d.h. die für das Abnehmen der abnehmbaren Prothese von dem festsitzenden Prothesenteil zur Überwindung der Sperrwirkung des Rastelementes erforderliche Kraft, ziemlich genau in Abhängigkeit allein von der Kennlinie der Federung des Rastelementes einerseits und der Gestaltung der Hinterschneidung andererseits einzustellen, d.h. mit einer Schräge der Hinterschneidung in einem derartigen Winkel, daß im Zusammenspiel mit der Federkennlinie die Patrize mit einer vorgegebenen Kraft unter Zurückdrücken des Rastelementes bzw. der Rastelemente aus der Matrize herausziehbar ist.

Die Rolle hat bzw. die Rollen haben dabei vorzugsweise einen zylindrischen oder konkaven Umfang, dem vorzugsweise der Grund der Hinterschneidung der Patrize angepaßt ist.

Der konkave Umfang entspricht dem in aller Regel kreisförmigen Querschnitt der Patrize und Innenquerschnitt der Matrize. Der zylindrische, dabei vorzugsweise langgestreckte, Umfang legt sich ebenfalls gut tangential an die Patrize an und wäre auch bei einem rechteckigen Querschnitt möglich. Er ist zudem einfach herzustellen. Es braucht beispielsweise nur ein Stück von einem, etwa an sich zu anderen Zwecken hergestellten, Röhrchen abgeschnitten zu werden.

Die U-Schenkel des Einsatzteils - der unmittelbaren Biegefeder wie der federnden Halterung - können leicht einwärts gewölbt sein, um beim Ineinanderschieben von Patrize und Matrize schon selbst als Biegefeder in der Weise zu wirken, daß ihre Wölbung zurückgedrückt und abgeflacht wird. Eine Rolle auf der unmittelbaren Biegefeder bedarf dabei eines entsprechend großen Innendurchmessers. Unter anderem Gesichtspunkt hat jedoch die Rolle eine gerade Achse und einen dieser angepaßten Innendurchmesser.

In der Regel wird die U-förmige Biegefeder mit zwei Rollen besetzt werden. Es kommt aber auch nur eine Rolle in Betracht, nämlich, um die gesamte Auslenkung der Feder an dieser zu verwenden, was etwa einer Halbierung der Kennliniensteigung entspricht.

Nahe ihren beiden Enden sind die U-Schenkel der Biegefeder vorzugsweise zum Einrasten in der Matrize einwärts gebogen, wo sie hinter eine in der Matrize ausgebildete Verjüngung fassen.

Die Enden der Biegefeder können in einer geeigneten Weise gegen Ausweichen nach außen gehalten werden, wenn das dem Konzept der Federung und dem Federmaterial entspricht. In aller Regel wird die U-förmige Feder jedoch nach Art einer Klammer arbeiten sollen in der Weise, daß ihre Schenkel auseinandergedrückt werden.

Als eine spezielle Variante der U-förmigen Biegefeder ist vorgesehen, daß den Enden der Biegefeder zwei schräg auseinanderführende Gleitflächen zugeordnet sind und die Biegefeder durch Verschieben nach den Gleitflächen hin spreizbar ist mittels eines auf den U-Steg wirkenden Betätigungselements.

In diesem Falle ist für Rollen keine Verwendung. Die Feder wird nicht durch die Patrize selbst zur Seite gedrückt, so daß sie ein- bzw. aus"schnappt". Da sie zum Befestigen und Lösen mittels des Betätigungselements geöffnet wird, kann ihre Gegenfläche an der Hinterschneidung rechtwinklig zur Ein- und Ausschubrichtung des Ankers liegen.
Vorteil dieser Variante ist, daß keine Abzugskraft ausgeübt werden muß. Die Haltekraft ist dagegen groß.

Schließlich wird als eine Weiterbildung der Erfindung vorgeschlagen, drei oder mehr Rastelemente derart anzuordnen, daß die Patrize nur durch die Rastelemente gehalten ist. Auf diese Weise kann jede Friktion zwischen Patrize und Matrize ausgeschlossen werden. Der Verschleiß wird auf Teile konzentriert, die - siehe oben - vorzugsweise austauschbar angeordnet sind. Auch eine Kombination von Rastelementen mit Rollen auf fest an der Matrize angeordneten Achsen wäre denkbar.

In der Regel wird jedoch der Hohlquerschnitt der Matrize dem Querschnitt der Patrize im wesentlichen spielfrei angepaßt sein.

Es versteht sich, daß man neben der dem Einsatzteil angepaßten Ausnehmung der Matrize genügend Material stehen lassen muß, um die erforderliche Festigkeit der Matrize in sich zu behalten. Es sollten im Bereich der Ausnehmung zwischen dem darüberliegenden und dem darunterliegenden Teil der Matrize mehrere diese Teile verbindende Materialstege verbleiben.

Die Ausnehmung wird im ganzen die Form einer verzweigten Schlitzung haben. Für das Einsatzteil in Form der Biegefeder ist die Schlitzhöhe geringfügig größer als der Federdurchmesser mit Ausnahme von Erweiterungen zum Einschieben und zur Aufnahme einer Rolle, die ungehindert drehbar sein soll. Für das Einsatzteil in Form der federnden Halterung muß die Ausnehmung deren, etwas größere, Höhe haben.

Als Material für die Feder wie auch für die Halterung, aber auch als Material für die Rollen kommt auch Kunststoff, vorzugsweise Polyacetal, in Betracht. Dieser Kunststoff zeichnet sich durch minimale Reibungswerte gegenüber Metallen, eine hohe Festigkeit und gute Federeigenschaften aus. Die Verwendung von Kunststoff wird möglich, da, wie sich aus den obigen Ausführungen ergibt, die Feder erst nach der vollständigen Herstellung der Prothesenkonstruktion eingesetzt wird.

Ebenso geeignet sind jedoch auch die in der Zahnprothetik üblicherweise verwendeten Metalle von Gold-Platin-Legierungen bis Edelstahl, wobei vorzugsweise eine Beschichtung aus Polytetrafluorethyl zur Reibungsverringerung aufgebracht sein kann.

Anhand der Zeichnung soll die Erfindung in Form von Ausführungsbeispielen näher erläutert werden. Es zeigen
- Fig. 1: eine Patrize mit aufgesetzter Haltescheibe in Perspektive,
- Fig. 2: die Patrize der Fig. 1 in Seitenansicht,
- Fig. 3: eine anders ausgebildete Patrize in Seitenansicht,
- Fig. 4: einen Schnitt entlang der Linie IV-IV in Fig. 5 durch Patrize und Matrize,
- Fig. 5: einen Schnitt entlang der Linie V-V durch die Matrize der Fig. 4,
- Fig. 6: Patrize und Matrize der Fig. 4 in Seitenansicht,
- Fig. 7: eine occlusale Ansicht einer auf ein festsitzendes Gebißteil aufgesteckten abnehmbaren Prothese im Teilschnitt,
- Fig. 8: einen Längsteilschnitt entlang der Linie I-I in Fig. 9 durch einen anderen aus Matrize und Patrize bestehenden Anker für die Zahnprothetik und
- Fig. 9: einen Querteilschnitt entlang der Linie II-II in Fig. 1 durch den Anker.

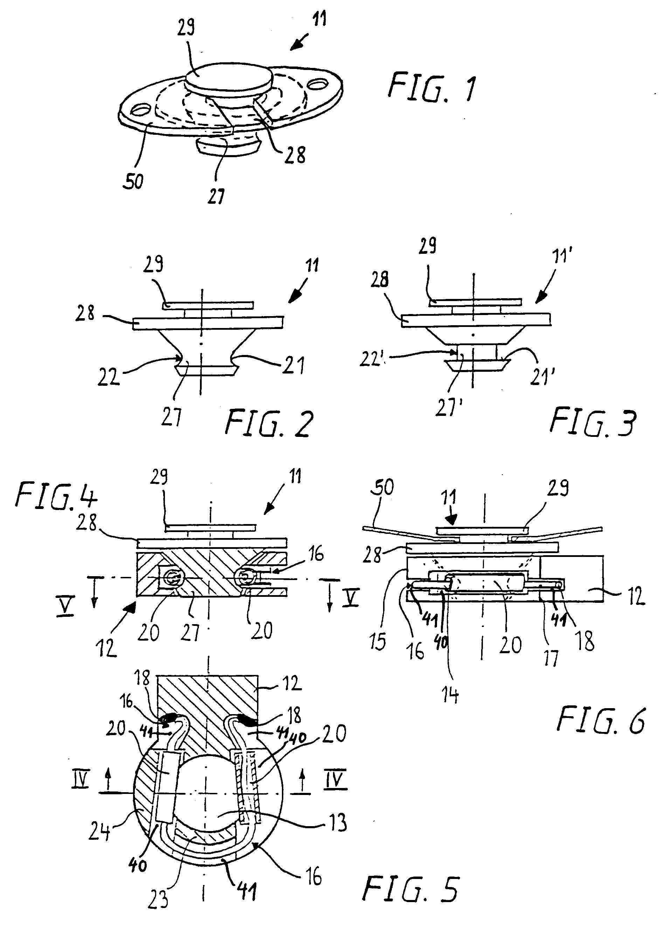

Die Fig. 1 und 2 zeigen in Perspektive bzw. in einer Seitenansicht eine Patrize 11 eines für die Zahnprothetik neu entwickelten Ankers. Die Patrize 11 besitzt als Halteelement ein Unterteil 27 mit einer hinterschnittenen Verjüngung 22, von der eine Abzugschräge 21 ausgeht. Der Winkel der Abzugschräge 21 in Verbindung mit dem Reibungskoeffizienten und der Kraft der noch zu beschreibenden Feder ist bestimmend für die Kraft, die benötigt wird, um das herausnehmbare Prothesenteil von dem festsitzenden Gebißteil zu trennen.

An der Oberseite der Patrize 11 erkennt man eine scheibenförmige Auflagefläche 28 und darüber eine Retentionsscheibe 29, in die beispielsweise eine die Verbindungsfläche vergrößernde Haltescheibe 50 eingeschoben werden kann.

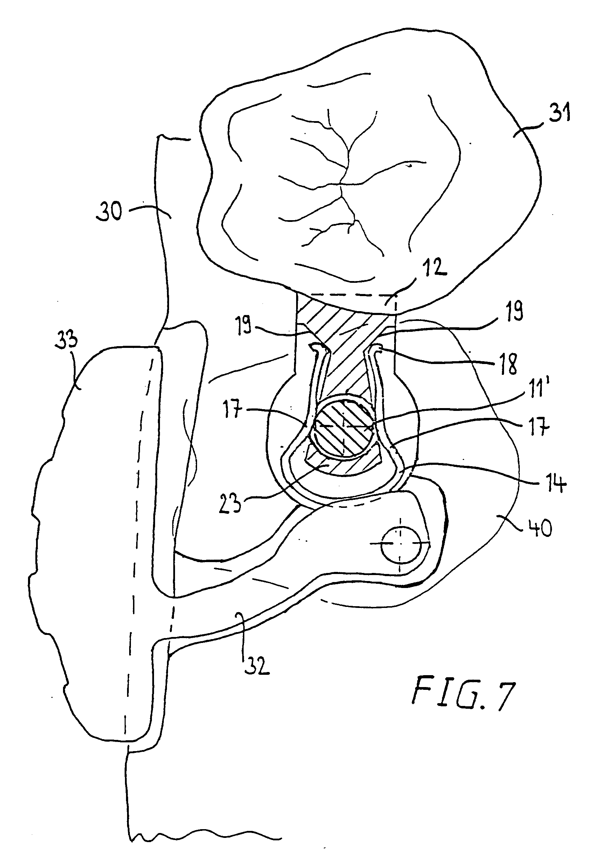

Fig. 3 zeigt eine abgewandelte Patrize 11′. Deren Haltefläche 21′ schließt mit der Abzugsrichtung bzw. der Symmetrieachse der Patrize 11′ einen Winkel von ca. 90 Grad ein. Ein solcher Anker ist selbsthemmend; die Verbindung zwischen Patrize 11′ und der zugehörigen Matrize kann nur noch gelöst werden, wenn zuvor die die Retention bewirkende Feder gelöst wird. Näheres hierzu wird anhand der Fig. 7 noch beschrieben.

Die Fig. 4, 5 und 6 zeigen den Aufbau der zu der Patrize 11 der Fig. 2 gehörenden Matrize 12. Da die Matrize 12 keine Kaukräfte, sondern nur die Kräfte beim Einsetzen und Herausnehmen der Prothese aufzunehmen hat, diese Kräfte jedoch dank der neuen Konstruktion exakt definiert sind, können die Abmessungen auf das absolute Minimum reduziert werden. Bauhöhen von unter 1 mm können ohne weiteres erreicht werden. Die Matrize 12 ist mit einem von der Stirnseite 15 ausgehenden flachen Schlitz 16 versehen, wobei zur Sicherstellung der Festigkeit Materialstege 23, 24 erhalten bleiben. In den flachen Schlitz 16 ist von der Stirnseite her eine U-förmig geformte Feder 14 eingeschoben. Die Enden 18 der Feder 14 liegen federnd in entsprechenden Vertiefungen im Schlitz 16 und sind so gegen Herausfallen gesichert, ohne daß das Einführen und Herausnehmen, beispielsweise im Reparaturfall, der Feder 14 dadurch behindert wird.

Durch eine entsprechende Formgebung des Schlitzes 16 sind die Enden 18 der Feder 14 gegen ein seitliches Ausweichen gesichert. Dadurch lassen sich die Schenkel 17 der Feder 14 durch Druck auf den Federsteg aufspreizen, was anhand der Fig. 7 noch näher beschrieben wird.

Im Bereich der Bohrung 13 der Matrize 12, deren Kontur an die Kontur der Patrize 11 angepaßt ist, sind auf die Schenkel 17 der Feder 14 Rollen 20, hier Hohlzylinder, drehbar aufgesteckt.

Diese Rollen 20 sorgen dafür, daß beim Einführen und Herausziehen der Patrize 11 praktisch nur noch rollende Reibung auftritt, die bekanntlich minimal ist. Dadurch lassen sich die Abzugs- und Haltekräfte noch exakter definieren. Dank der durch die rollende Reibung stark verringerten Abnützung wird auch die Lebensdauer bedeutend erhöht.

Wie insbesondere Fig. 6 erkennen läßt, ist durch eine entsprechende Profilierung des Schlitzes 16 dafür zu sorgen, daß die als Drehachse dienende Feder 14 so fixiert ist, daß sich die Rollen 20 im Schlitz 16 ungehindert drehen können.

Der Schlitz 16 hat damit höhere Bereiche 40, in denen sich Rollen 20 befinden, und jeweils beiderseits der Rollen 20 flachere Bereiche 41, in denen die Feder axial gehalten ist.

Fig. 7 zeigt eine Ausführungsform, bei der zunächst die Schenkel 17 der Feder 14 direkt in die hinterschnittene Verjüngung 22 der Patrize 11 einrasten. Im Bereich der Enden 18 der Feder 14 sind im Schlitz 16 jedoch Spreizschrägen 19 ausgebildet. Wird vom Gebißträger der im herausnehmbaren Gebißteil 30 gelagerte Betätigungshebel 32,33 verschwenkt, drückt der Hebel 32 auf die Basis der Feder 14. Diese wird verschoben, worauf die Enden 18 auf den Spreizschrägen 19 gleiten und die Schenkel 17 der Feder 14 gespreizt werden. Im gespreizten Zustand der Feder 14 können Matrize 12 und Patrize 11 frei von Abzugskräften voneinander gelöst werden. Dank dieser Konstruktion kann hier die in der Fig. 3 dargestellte selbsthemmende Patrize 11′ verwendet werden.

Die Patrize 11′ wird wie an sich bekannt auf einem festsitzenden Gebißteil, beispielsweise einer Wurzelkappe 40, fixiert. Es ist aber auch möglich, die Matrize 12 an einer Krone 31 zu befestigen und die Patrize 11 an dem herausnehmbaren Prothesenteil 30.

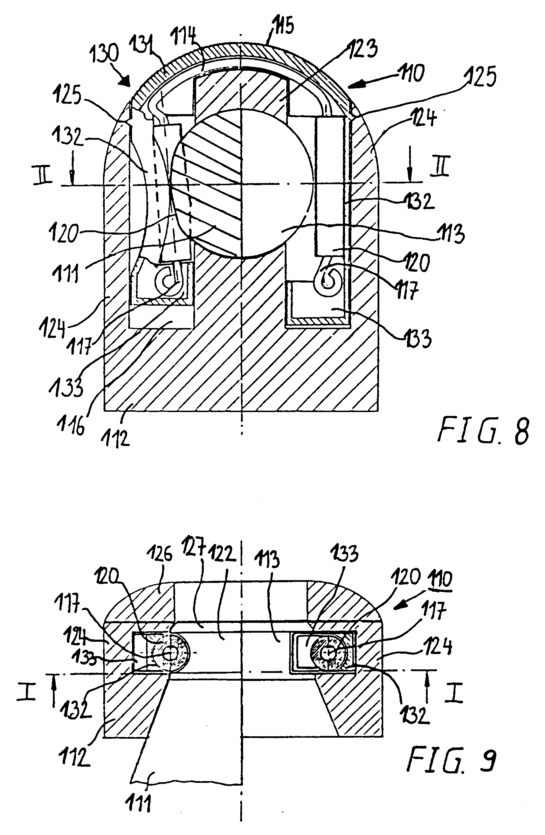

Auch die Patrize 111 gemäß Fig. 8 und 9 besitzt als Halteelement ein Unterteil 127 mit einer hinterschnittenen Verjüngung 122, deren konstruktive Ausgestaltung entscheidend mitbestimmend für die Halte- und Lösekraft zwischen Patrize 111 und Matrize 112 ist.

Die dazugehörige Matrize 112 ist ein flaches Metallelement mit einer zentralen Öffnung 113, deren Kontur der Patrize 111 angepaßt ist. Von der Stirnfläche 115 ausgehend ist ein flacher Schlitz 116 herausgearbeitet; Verbindungsstege 123, 124 sorgen für eine ausreichende Stabilität der Matrize 112 und geben dem Schlitz 116 eine U-Form.

In den Schlitz 116 ist von der Stirnseite 115 aus ein Einsatzelement 130 eingeschoben. Dieses besitzt seinerseits einen U-förmigen Querschnitt, der in Richtung auf die zentrale Bohrung 113 offen ist. Das Einsatzelement 130 besteht aus einem federnden Metall oder Kunststoff, beispielsweise Polyacetal. Seine Abmessungen sind so gewählt, daß sein U-Steg 131 den Schlitz 116 ausfüllt und das Einsatzelement 130 klemmend fixiert. Die U-Schenkel 132 dagegen sind im Schlitz 116 frei beweglich.

In das Einsatzelement 130 ist ein U-förmig gebogener Stahldraht 114 als Achse eingelegt. Auf die Schenkel 117 des Stahldrahtes 114 sind Rollen 120, wiederum zylindrische Rohrabschnitte, aufgeschoben und drehbar fixiert. Diese Rollen 120 rasten in die Vertiefung 122 in der Patrize 111 ein.

Alternativ dazu kann die U-förmige Achse 114 auch durch zwei Öffnungen in dem Einsatzelement 130 hindurchgesteckt und befestigt werden.

Die U-Schenkel 132 des Einsatzelementes 130 sind einwärts geschweift und liegen an den Rollen 120 an. Sie unterstützen damit die Federachse 114 wirksam und beugen somit einem Bruch der Achse 114 vor. Die freien Enden 133 des Einsatzelementes 130 sind im Schlitz 116 frei längsbeweglich und sorgen so für den nötigen Längenausgleich beim Federn.

In den Bereichen der Rollen 120 haben die Schenkel 132 des Einsatzelementes 130 Ausschnitte 140, so daß hier die volle Höhe des Schlitzes 116 für die Rollen 120 zur Verfügung steht. Beiderseits davon liegen die Schenkel 117 der Feder 114 jedoch axial abgestützt in flacheren Räumen des Einsatzelementes 130.

Auch hier können die Abmessungen der Matrize 112 auf das absolute Minimum reduziert werden, wobei Bauhöhen von unter 1 mm ohne weiteres zu erreichen sind. Die Abnützung der Rollen 120 einerseits und der Patrize 111 andererseits ist minimal, so daß sich die definierten Halte- und Lösekräfte über eine lange Gebrauchsdauer der Prothese erhalten lassen. Gegebenenfalls kann eine Verstärkung 126 auf die Matrize 112 aufgebracht werden.

## Patentansprüche

1. Anker zum Befestigen einer abnehmbaren Zahnprothese an einem festsitzenden Prothesenteil, der aus einer eine Hinterschneidung (22;22';122) aufweisenden Patrize (11;11';111) und einer die Patrize ringförmig umfassenden, mit mindestens einem federnden Rastelement (14,20;117,120,132) in die Hinterschneidung (22;22';122) greifenden Matrize (12;112) besteht, wobei das Rastelement (17,20;177,120,132) sich mit tangentialer Komponente zu der Patrize (11;11';111) erstreckt,
dadurch gekennzeichnet,
daß das Rastelement beiderseits der Stelle seines Eingriffs in die Hinterschneidung (22;22';122) der Patrize (11;11';111) in einer flachen Ausnehmung (41) der Matrize (12;112) gehalten ist, derart, daß es sich nach tangentialer Durchquerung der Hinterschneidung (22;22';122) wieder in die Matrize (12; 112) hinein erstreckt.

2. Anker nach Anspruch 1,
dadurch gekennzeichnet
daß zwei Rastelemente (17,20;117,120,132) einander gegenüber angeordnet sind.

3. Anker nach Anspruch 1 oder 2,
dadurch gekennzeichnet,
daß das Rastelement (17,20;117,120,132) bzw. die Rastelemente (17,20;117,120,132) an einem U-förmigen Einsatzteil (14;130) angeordnet ist bzw. sind, das in eine ihm angepaßte Ausnehmung (16;116) der Matrize (12;112), vorzugsweise einrastend, einschiebbar ist und herausnehmbar ist, wobei der U-Steg (31) in einem nach dem Umfang der Matrize (12;112) hin offenen Schlitz (41) Platz erhält.

4. Anker nach Anspruch 3,
dadurch gekennzeichnet,
daß das Einsatzteil eine Biegefeder (14) ist und das Rastelement (17,20) bzw. die Rastelemente (17,20) durch einen, vorzugsweise mit einer Rolle (20) besetzten, U-Schenkel (17) der Biegefeder (14) gebildet ist bzw. sind.

5. Anker nach Anspruch 3 oder 4,
dadurch gekennzeichnet,
daß die U-Schenkel (17;132) des Einsatzteils (14;20;130) leicht einwärts gewölbt sind.

6. Anker nach Anspruch 4 oder 5,
dadurch gekennzeichnet,
daß die U-Schenkel (17) der Biegefeder (14) zum Einrasten in der Matrize (12) nahe ihren beiden Enden (18) einwärts gebogen sind und hinter eine in der Matrize (12) ausgebildete Verjüngung fassen.

7. Anker nach einem der Ansprüche 4 bis 6,
dadurch gekennzeichnet,
daß die Enden (18) der Biegefeder (14) gegen Ausweichen nach außen gehalten sind.

8. Anker nach einem der Ansprüche 4 bis 7,
dadurch gekennzeichnet,
daß den Enden (18) der Biegefeder (14) zwei schräg auseinanderführende Gleitflächen (19) zugeordnet sind und die Biegefeder (14) durch Verschieben nach den Gleitflächen (19) hin spreizbar ist mittels eines auf den U-Steg wirkenden Betätigungselements (32,33).

9. Anker nach Anspruch 3,
dadurch gekennzeichnet,
daß das Einsatzteil eine federnde Halterung (130) für das Rastelement (117,120) bzw. die Rastelemente (117,120) ist, das bzw. die aus einer auf einer, federnden oder nicht federnden, Achse (117) gelagerten Rolle (120) besteht bzw. bestehen.

10. Anker nach Anspruch 9,
dadurch gekennzeichnet,
daß das U-förmige Einsatzteil (130) auch einen U-förmigen, nach innen offenen Querschnitt hat.

11. Anker nach Anspruch 9 oder 10,
dadurch gekennzeichnet,
daß die Achse(n) (117) der Rolle(n) (120) durch einen Schenkel (117) einer U-förmigen Biegefeder (114) gebildet ist bzw. sind.

12. Anker nach einem der Ansprüche 3 bis 7 oder 9 bis 11,
dadurch gekennzeichnet,
daß die Hinterschneidung (22;122) der Patrize (11,111) eine Schräge (21) in einem derartigen Winkel aufweist, daß die Patrize (11,111) mit einer vorgegebenen Kraft unter Zurückdrücken des Rastelementes (17) bzw. der Rastelemente (17) aus der Matrize (12,112) herausziehbar ist.

13. Anker nach einem der Ansprüche 3 bis 7 oder 9 bis 12,
dadurch gekennzeichnet,
daß die Rolle (20;120) bzw. die Rollen (20;120) einen zylindrischen oder konkaven Umfang hat bzw. haben, dem vorzugsweise der Grund der Hinterschneidung (22;122) der Patrize (11;111) angepaßt ist.

14. Anker nach einem der Ansprüche 1 bis 13,
gekennzeichnet durch drei oder mehr derart angeordnete Rastelemente, daß die Patrize nur durch die Rastelemente gehalten ist.

## Claims

1. An anchor for attaching a removable dental prosthesis to a fixed prosthesis portion, comprising a male part (11; 11'; 111) with an undercut (22; 22'; 122), and a female part (12; 122) annularly encompassing the male part and having at least one resilient locking element (17, 20, 117, 120, 132) engaging with the undercut (22; 22'; 122), with said locking element (17, 20; 117, 120 132) extending with a component tangential to the male part (11; 11'; 111),
characterized in that the locking element is held in a shallow recess (41) in the female part (12; 112) on both sides of its place of engagement with the undercut (22; 22'; 122) of the male part (11; 11'; 111) such that upon tangentially crossing the undercut (22; 22'; 122) it again extends into the female part (12; 112).

2. The anchor according to claim 1,
characterized in that two locking elements (17, 20; 117, 120, 132) are arranged opposite one another.

3. The anchor according to claim 1 or 2,
characterized in that the locking element (17, 20; 117, 120, 132) or locking elements (17, 20; 117, 120, 132) is or are arranged on a U-shaped insert portion (14; 130) insertable preferably so as to lock into a recess (16; 116) in the female part (12; 112) and removable from the same, said recess being adapted to said insert portion, with the crosspiece of the U being accommodated in a slot (41) open toward the periphery of the female part (12; 112).

4. The anchor according to claim 3,
characterized in that the insert portion is a bending spring (14) and the locking element (17, 20) or locking elements (17, 20) is or are formed by a leg (17), preferably equipped with a roller (20), of the U-shaped bending spring (14).

5. The anchor according to claim 3 or 4,
characterized in that the legs (17; 132) of the U-shaped insert portion (14; 20; 130) are slightly inwardly curved.

6. The anchor according to claim 4 or 5,
characterized in that, for locking into the female part (12), the legs (17) of the U-shaped bending spring (14) are bent inwardly near their two ends (18) and take hold behind a tapered portion provided in the female part (12).

7. The anchor according to one of claims 4 to 6,
characterized in that the ends (18) of the bending spring (14) are held to prevent outward yielding.

8. The anchor according to one of claims 4 to 7, characterized in that two slantingly diverging sliding surfaces (19) are associated with the ends (18) of the bending spring (14) and the bending spring (14) can be spread apart by displacement in the direction of the sliding surfaces (19), by means of an actuating element (32, 33) acting on the crosspiece of the U.

9. The anchor according to claim 3,
characterized in that the insert portion is a resilient holder (130) for the locking element (117, 120) or locking elements (117, 120) comprising a roller (120) mounted on a resilient or non-resilient shaft (117).

10. The anchor according to claim 9,
characterized in that the U-shaped insert portion (130) also has a U-shaped, inwardly open cross section.

11. The anchor according to claim 9 or 10,
characterized in that the shaft(s) (117) of the roller(s) (120) is or are formed by a leg (117) of a U-shaped bending spring (114).

12. The anchor according to one of claims 3 to 7 or 9 to 11,
characterized in that the undercut (22; 122) of the male part (11, 111) has a portion (21) slanted at such an angle that the male part (11, 111) can be extracted from the female part (12, 112) with a given force while the locking element (17) or locking elements (17) is or are being pressed back.

13. The anchor according to one of claims 3 to 7 or 9 to 12,
characterized in that the roller (20; 120) or rollers (20; 120) has or have a cylindrical or concave periphery, with the bottom of the undercut (22;122) of the male part (11; 111) preferably being adapted thereto.

14. The anchor according to one of claims 1 to 13,
characterized by three or more locking elements arranged in such a manner that the male part is held only by the locking elements.

## Revendications

1. Attache pour la fixation d'une prothèse dentaire amovible à une partie de prothèse fixe, qui consiste en une partie mâle (11, 11', 111) comportant une entaille (22, 22', 122) et en une partie femelle (12, 112) qui entoure la partie mâle à la façon d'une bague et s'engage moyennant au moins un élément d'encliquetage résilient (14, 20; 117, 120, 132) dans l'entaille (22, 22', 122), l'élément d'encliquetage (17, 20, 177, 120, 132) s'étendant avec une composante tangentielle à la partie mâle (11; 11', 111), caractérisée en ce que l'élément d'encliquetage est retenu des deux côtés de l'endroit de son engagement dans l'entaille (22, 22'; 122) de la partie mâle (11, 11', 111), dans un évidement plat (41) pratiqué dans la partie femelle (12; 112), de telle sorte qu'il s'étend de nouveau dans la partie femelle (12; 112) après passage tangentiel dans l'entaille (22, 22'; 122).

2. Attache selon la revendication 1 caractérisée en ce que deux éléments d'encliquetage (17, 20; 117, 120, 132) sont agencés l'un en face de l'autre.

3. Attache selon la revendication 1 ou 2 caractérisée en ce que l'élément d'encliquetage (17, 20; 117, 120, 132) ou les éléments d'encliquetage (17, 20; 117, 120, 132) sont agencés à une pièce en forme de U (14; 130) qui est engageable dans un évidement (16; 116) de la partie femelle (12, 112), qui lui est adapté, de préférence par encliquetage, et qui en est retirable, l'étrier en U étant logé dans une fente (41) ouverte vers la périphérie de la partie femelle (12, 112).

4. Attache selon la revendication 3 caractérisée en ce que la pièce en U consiste en un ressort courbe (14) et en ce que l'élément ou les éléments d'encliquetage (17, 20) sont constitués par une branche de U (17) du ressort (14), de préférence munie d'un rouleau (20).

5. Attache selon la revendication 3 ou 4 caractérisée en ce que les branches du U (17; 132) de la pièce en U (14; 20; 130) sont légèrement courbées vers l'intérieur.

6. Attache selon la revendication 4 ou 5 caractérisée en ce que les branches du U (17) du ressort courbe (14) sont coudées vers l'intérieur à proximité de leur extrémité (18) et s'engagent derrière un rétrécissement de la partie femelle (12), en vue de l'encliquetage dans la partie femelle (12).

7. Attache selon l'une des revendications 4 à 6 caractérisée en ce que les extrémités (18) du ressort courbe (14) sont retenues contre toute déviation vers l'extérieur.

8. Attache selon l'une des revendications 4 à 7 caractérisée en ce que deux surfaces de glissement (19) s'écartant l'une de l'autre de façon inclinée sont associées aux extrémités (18) du ressort courbe (14), et en ce que ledit ressort courbe (14) est écartable par déplacement vers les surfaces de glissement (19) à l'aide d'un organe d'actionnement (32, 33) qui agit sur la semelle du U.

9. Attache selon la revendication 3 caractérisée en ce que la pièce en U constitue un moyen de retenue résilient (130) pour l'élément ou les éléments d'encliquetage (117, 120) qui consistent en un rouleau (120) logé sur un axe (117) résilient ou non résilient.

10. Attache selon la revendication 9 caractérisée en ce que la pièce en forme de U (130) présente aussi une section en forme de U, ouverte vers l'intérieur.

11. Attache selon la revendication 9 ou 10 caractérisée en ce que l'axe ou les axes (117) du ou des rouleaux (120) sont constitués par une branche (117) d'un ressort courbe en forme de U (114).

12. Attache selon l'une des revendications 3 à 7 ou 9 à 11 caractérisée en ce que l'entaille (22; 122) de la partie mâle (11, 111) comporte une face inclinée (21) selon un angle tel que la partie mâle (11, 111) peut être retirée de la partie femelle (12, 112) à l'aide d'une force prédéterminée qui repousse l'élément d'encliquetage (17) ou les éléments d'encliquetage (17).

13. Attache selon d'une des revendications 3 à 7 ou 9 à 12 caractérisée en ce que le ou les rouleaux (20; 120) présentent un périmètre cylindrique ou concave, auquel est de préférence adapté le fond de l'évidement (22; 122) de la partie mâle (11; 111).

14. Attache selon l'une des revendications 1 à 13 caractérisée par trois ou plus d'éléments d'encliquetage agencés de telle sorte que la partie mâle n'est retenue que par les éléments d'encliquetage.
